# EUROPEAN PATENT APPLICATION

(11) **EP 3 943 993 A1**
(43) Date of publication of application: **26.01.2022**
(21) Application number: 21171021.5
(22) Date of filing: 28.04.2021
(51) Int. Cl.: G02B 6/44

(54) **THERMAL RESISTANT WATER BLOCKING TAPE**

(30) Priority: 20.07.2020 IN 202011030990
(71) Applicant: Sterlite Technologies Limited, Haryana 122002 (IN)
(72) Inventor: MARRU, Pramod, 122002 Haryana (IN); SHUKLA, Vikash, 122002 Gurgaon (IN); MISHRA, Atulkumar, 122002 Gurgaon (IN); PURI, Nikhil, 122002 Haryana (IN); GHORPADE, Santhosh, 122002 Haryana (IN)
(74) Representative: Hepworth Browne

(57) **Abstract**

The present disclosure provides a thermal resistant water blocking tape (100) for use in an optical fibre cable. The thermal resistant water blocking tape (100) includes a water blocking tape (102). The water blocking tape (102) is resistant to water penetration. The water blocking tape (102) is defined by a top surface and a bottom surface. In addition, the water blocking tape (102) has an intumescent material (110) that reduces transmission of thermal radiations across the thermal resistant water blocking tape (100) at elevated temperature. The intumescent material (110) may be coated on the water blocking tape (102). The intumescent material (110) may produce insulating carbonaceous foam at elevated temperature. The insulating carbonaceous foam may reduce transmission of thermal radiations across the thermal resistant water blocking tape (100) at the elevated temperature. The intumescent material (110) is coated on the water blocking tape (102). The water blocking tape (102) may be made of one or more of a non-woven fabric and a glass based fabric. The intumescent material (110) may be water based intumescent paint. The water blocking tape (102) may include a top layer (104), a bottom layer (106) and super absorbent powder (108). The super absorbent powder (108) is sandwiched between the top layer (104) and the bottom layer (106). The intumescent material (110) may be coated on at least one of the top surface and the bottom surface of the water blocking tape (102).

## Description

### Field of the Invention.

The present disclosure relates to the field of optical fibre cables and, in particular, relates to a thermal resistant water blocking tape.

### Description of Prior Art

Optical fibre cables have secured an important position in building optical networks of modern communication systems across the world. In addition, internal components of the optical fibre cables are made up of non-fire retardant or combustible materials. For example, internal components of the optical fibre cables include water blocking tapes, buffer tubes and the like. Further, use of the non-fire retardant materials in the internal components of the optical fibre cables impact fire performance of the optical fibre cables in event of fire. Conventionally, outer jackets of the optical fibre cables are manufactured using fire retardant material to provide fire resistance to the optical fibre cables. However, use of the fire resistant materials in the outer jacket of the optical fibre cables resist fire for a limited amount of time. Moreover, use of the fire resistant materials in the outer jacket of the optical fibre cables reduces other properties of the optical fibre cables such as mechanical and thermal properties. Also, the fire resistant material is used for jacketing and buffering to make the optical fibre cables fire resistant. However, mechanical properties of the optical fibre cables are reduced due to high filler loading in polymer materials of the optical fibre cables. Also, the fire resistant material reacts with fire easily and increases fire propagation. Also, the fire resistant material increases heat release and toxic gases evaluation in event of fire.

In light of the above stated drawbacks, there is a need for an improved fire retardant material.

### SUMMARY OF THE INVENTION

In an aspect, the present disclosure provides a thermal resistant water blocking tape for use in an optical fibre cable. The thermal resistant water blocking tape includes a water blocking tape. The water blocking tape is resistant to water penetration. The water blocking tape is defined by a top surface and a bottom surface. In addition, the water blocking tape has an intumescent material that reduces transmission of thermal radiations across the thermal resistant water blocking tape at elevated temperature.

The intumescent material may be coated on the water blocking tape.

The intumescent material may produce insulating carbonaceous foam at elevated temperature. The insulating carbonaceous foam may reduce transmission of thermal radiations across the thermal resistant water blocking tape at the elevated temperature.

The elevated temperature may be in range of 80° C to 600° C.

The intumescent material, when exposed to the elevated temperature, may swell from a first thickness to a second thickness producing the insulating carbonaceous foam. The first thickness is greater than equal to the second thickness.

The intumescent material may react at the elevated temperature forming a char layer on the surface of the water blocking tape.

The intumescent material is coated on the water blocking tape such that the coating may be in the range of 100 microns to 300 microns. The intumescent material may be coated on a non-woven cloth that has a thickness in a range of 300 microns to 500 microns.

The water blocking tape may be made of one or more of a non-woven fabric and a glass based fabric.

The intumescent material may be water based intumescent paint. The water based intumescent paint may have water content between 50-60% and remaining solid content.

The intumescent material may be made of one or more of a compound selected from a group. The group consists of pentaerythritol (PER) or dipentaerythritol, (DIPER), Ammonium polyphosphate, Aluminium tri hydroxide (ATH), Magnesium hydroxide, Nano materials (clay nanoparticles), Tio2, and one or more Coupling agents, Binders, Dispersing agent and Melamine.

The water blocking tape may include a top layer, a bottom layer and super absorbent powder. The super absorbent powder is sandwiched between the top layer and the bottom layer.

The intumescent material may be coated on at least one of the top surface and the bottom surface of the water blocking tape.

### BRIEF DESCRIPTION OF DRAWING

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
FIG. 1 illustrates a cross sectional view of a thermal resistant water blocking tape; and
FIG. 2 illustrates a cross sectional view of a fire resistant optical fibre cable.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

### REFERENCE NUMERALS IN THE DRAWINGS

For a more complete understanding of the present invention parts, reference is now made to the following descriptions:
- 100.: Thermal resistant water blocking tape.
- 102.: Water blocking tape.

- 104.: Top layer.
- 106.: Bottom layer.
- 108.: Super absorbent powder.
- 110.: Intumescent material.
- 200.: Fire resistant optical fibre cable.
- 202.: Plurality of buffer tubes.
- 204.: Optical fibre ribbon stack.
- 206.: One or more water swellable yarns.
- 208.: Mica tape.
- 210.: Sheath.
- 212.: One or more ripcords.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced items.

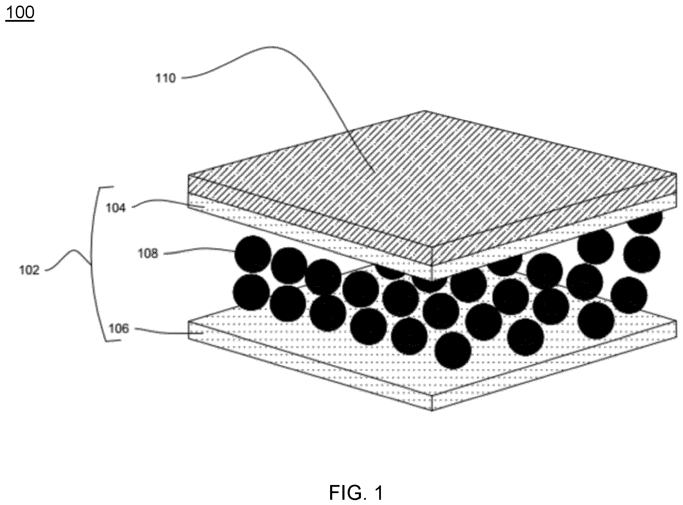

According to FIG. 1, this is a cross sectional view of a thermal resistant water blocking tape 100. The thermal resistant water blocking tape 100 is a fire resistant water blocking tape. The thermal resistant water blocking tape 100 shows resistance against fire and possesses water blocking capabilities. The thermal resistant water blocking tape 100 includes a water blocking tape 102. In addition, the thermal resistant water blocking tape 100 includes an intumescent material 110 on the water blocking tape 102. The water blocking tape 102 is resistant to water penetration.

As shown in FIG. 1, the water blocking tape 102 is defined by a top surface and a bottom surface. The top surface may be towards a sheath of a cable and the bottom surface is towards a core of the cable. The water blocking tape 102 may include a top layer 104, a bottom layer 106 and super absorbent powder 108. The super absorbent powder 108 is sandwiched between the top layer 104 and the bottom layer 106. The top layer 104 and the bottom layer 106 correspond to two layers of tapes of the water blocking tape 102. The structure of the water blocking tape 102 may include any currently available water blocking tape over which the intumescent material 110 can be applied. The intumescent material 110 may be coated on at least one of the top surface and the bottom surface of the water blocking tape 102.The top layer 104 and the bottom layer 106 may enclose the super absorbent powder 108.

The super absorbent powder 108 may have capability to absorb and retain extremely high volume of liquids. In an example, liquids include water. The top layer 104 and the bottom layer 106 may have one or more properties. The one or more properties include stretch, absorbency, cushioning and as a barrier.

Each of the top layer 104 and the bottom layer 106 may have a first side and a second side. The top layer 104 has the first side and the second side. In addition, the bottom layer 106 has the first side and the second side. Further, the first side of the top layer 104 is the outer side of the top layer 104. Furthermore, the second side of the top layer 104 is the inner side of the top layer 104. Moreover, the first side of the bottom layer 106 is the outer side of the bottom layer 106. Also, the second side of the bottom layer 106 is inner side of the bottom layer 106.

In addition, the first side of the top layer 104 or the bottom layer 106 may be coated with the intumescent material 110. The first side of the top layer 104 may be coated with the intumescent material 110. The first side of the bottom layer 106 may be coated with the intumescent material 110.

The first side of the top layer 104 is applied with the intumescent material 110. In addition, the second side of the top layer 104 may face the super absorbent powder 108. The first side of the bottom layer 106 may be applied with the intumescent material 110. Further, the second side of the bottom layer 106 may face the super absorbent powder 108. The water blocking tape 102 may be made of one or more of a non-woven fabric and a glass based fabric.

The thermal resistant water blocking tape 100 may be positioned inside a plurality of buffer tubes. In addition, buffer tube is an encasement tube used to encapsulate a number of optical fibres or an optical fibre ribbon stack. In addition, a buffer tube is used in an optical fibre cable to provide mechanical isolation and protection from physical damages. The plurality of buffer tubes may include the optical fibre ribbon stack or a plurality of optical fibres.

The optical fibre ribbon stack is a bundle of a plurality of optical fibre ribbons arranged together. The optical fibre ribbon may include a number of optical fibres arranged together within a matrix material. In addition, multiple individual optical fibre ribbons are stacked into bundles to form the optical fibre ribbon stack. Further, optical fibre refers to a medium associated with transmission of information over long distances in the form of light pulses. Furthermore, optical fibre uses light to transmit voice and data communications over long distances.

The thermal resistant water blocking tape 100 may surround the optical fibre ribbon stack. The thermal resistant water blocking tape 100 may surround the plurality of optical fibres. The optical fibre ribbon stack or the plurality of optical fibres is placed inside a buffer tube. The intumescent material 110 may be applied on a non-woven cloth. The intumescent material 110 may be applied on a glass cloth.

The intumescent material 110 may reduce transmission of thermal radiations across the thermal resistant water blocking tape 100 at elevated temperature. The intumescent material 110 may produce insulating carbonaceous foam at the elevated temperature. The intumescent material 110 is coated on the water blocking tape 102. The insulating carbonaceous foam may reduce transmission of thermal radiations across the thermal resistant water blocking tape 100 at the elevated temperature. The elevated temperature may be in the range of 80° C to 600° C. The insulating carbonaceous foam may reduce transmission of thermal radiations across the thermal resistant water blocking tape 100. The intumescent material 110 may have a first thickness. The first thickness corresponds to a thickness before the intumescent material 110 comes in contact with fire. The intumescent material 110 when exposed to the elevated temperature, may swell from the first thickness to a second thickness to produce the insulating carbonaceous foam. The first thickness may be greater than equal to the second thickness. The intumescent material 110 with the first thickness may react under influence of fire and swells in a controlled manner on the water blocking tape 102. The first thickness of the intumescent material 110 may change to the second thickness after swelling. The intumescent material 110 may produce insulating carbonaceous foam layer around the cable after reacting and swelling. The insulating carbonaceous foam may protect a substrate from effects of the fire to enter inside an optical fibre cable.

The intumescent material 110 may react at the elevated temperature to form a char layer on the surface of the water blocking tape 102. The intumescent material 110 may react under the influence of fire and forms the char layer on the surface of the water blocking tape 102. The char layer may produce an insulating carbonaceous char that protects a substrate from penetration of fire inside the optical fibre cable. The intumescent material 110 may produce char which is a poor conductor of heat and retards heat transfer. The insulating carbonaceous foam may be microporous carbonaceous foam formed by a chemical reaction between multiple compounds used for the intumescent material 110. The intumescent material 110 may be made of at least one compound selected from a group. The group consists of pentaerythritol (PER) or dipentaerythritol, (DIPER), Ammonium polyphosphate, Aluminium tri hydroxide (ATH), Magnesium hydroxide, Nano materials (clay nanoparticles), Tio2, and one or more Coupling agents, Binders, Dispersing agent and Melamine.

The intumescent material 110 may be coated on the water blocking tape 102 such that the coating has a thickness of 100 microns to 300 microns. The thickness of the intumescent material 110 on the water blocking tape 102 may vary. The intumescent material 110 may have a larger thickness which will provide more fire protection. However, the larger thickness of the intumescent material 110 may lead to degradation in water blocking properties. The intumescent material 110 may be applied on a non-woven cloth. The intumescent material 110 coated on the non-woven cloth may have a thickness in a range of about 300 microns to 500 microns to provide better fire resistance. The thickness of the intumescent material 110 on the non-woven cloth may vary.

The intumescent material 110 may be water based intumescent paint. The water based intumescent paint may have water content between 50 -60% and remaining solid content between. The intumescent material 110 applied on the water blocking tape 102 may be in an outward direction towards sheath of an optical fibre cable and a layer of the water blocking tape 102 without the intumescent material 110 may be in an inward direction towards core of the optical fibre cable.

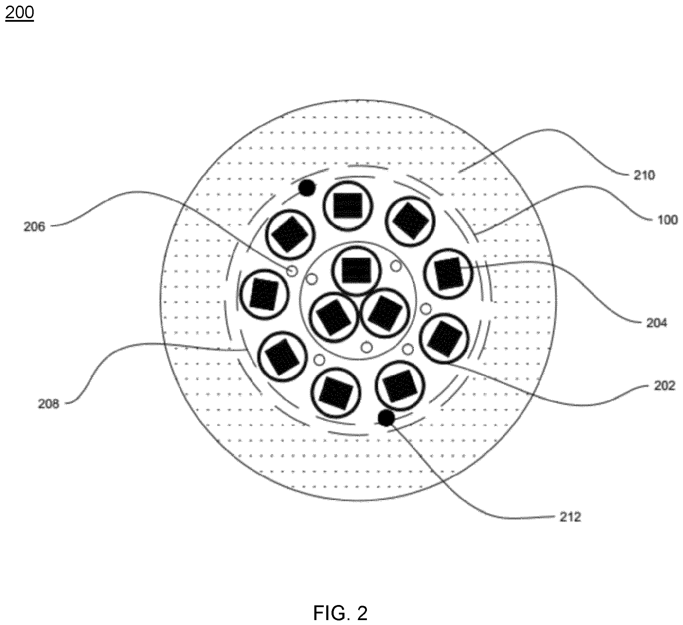

According to FIG. 2, this is a cross sectional view of a fire resistant optical fibre cable 200. The fire resistant optical fibre cable 200 is a fire retardant optical fibre cable. The fire resistant optical fibre cable 200 may include one or more layers of buffer tubes. In addition, the fire resistant optical fibre cable 200 includes the thermal resistant water blocking tape 100 (as shown in FIG. 1), an optical fibre ribbon stack 204, one or more water swellable yarns 206, a mica tape 208, and a sheath 210.

The one or more layer of buffer tubes may be positioned inside a core of the fire resistant optical fibre cable 200. In addition, buffer tube is an encasement tube used to encapsulate a plurality of optical fibres or the optical fibre ribbon stack 204. Further, the buffer tube is used in the fire resistant optical fibre cable 200 to provide mechanical isolation and protection from physical damages. The plurality of buffer tubes 202 may be used in any type of optical fibre cable with any structure. Furthermore, each of the plurality of buffer tubes 202 may include the optical fibre ribbon stack 204.

In addition, the optical fibre ribbon stack 204 may include the plurality of optical fibre ribbons. Number of the plurality of optical fibre ribbons in the optical fibre ribbon stack 204 is 12. Number of the plurality of optical fibre ribbons in the optical fibre ribbon stack 204 may vary. Further, each of the plurality of optical fibre ribbons may include the plurality of optical fibres in the range of 8 to 24.

The optical fibre ribbon stack 204 is a bundle of a plurality of optical fibre ribbons arranged together. The optical fibre ribbon includes a number of optical fibres arranged together within a matrix material. In addition, multiple individual optical fibre ribbons may be stacked into bundle to form the optical fibre ribbon stack 204. Each of the plurality of optical fibre ribbons may include the plurality of optical fibres.

The fire resistant optical fibre cable 200 includes one or more layers of buffer tubes. The one or more layer of buffer tubes may include a first layer of buffer tubes and a second layer of buffer tubes (as shown in FIG. 2). The first layer of buffer tubes and the second layer of buffer tubes may include a plurality of buffer tubes 202. The one or more layer of buffer tubes may be arranged concentrically inside the core of the fire resistant optical fibre cable 200. The second layer of buffer tubes may surround the first layer of buffer tubes. The first layer of buffer tubes and the second layer of buffer tubes include the plurality of buffer tubes 202.

The first layer of buffer tubes is the inner layer of the one or more layer of buffer tubes. In addition, the second layer of buffer tubes is the outer layer of the one or more layer of buffer tubes. Each buffer tube in the first layer of buffer tubes and the second layer of buffer tubes is circular in shape. Each buffer tube in the first layer of buffer tubes and the second layer of buffer tubes is of any suitable shape. Each of the plurality of buffer tubes 202 is made up of fire retardant material. Each of the plurality of buffer tubes 202 is made up of LSZH material. Each of the plurality of buffer tubes 202 is made up of any suitable material of the like.

Number of the plurality of buffer tubes 202 inside the fire resistant optical fibre cable 200 may be 12. Number of the plurality of buffer tubes 202 inside the fire resistant optical fibre cable 200 may vary. Number of the plurality of optical fibre ribbons inside each of the plurality of buffer tubes 202 may be 12. Number of the plurality of optical fibre ribbons inside each of the plurality of buffer tubes 202 may vary.

Number of the plurality of buffer tubes 202 in the first layer of buffer tubes may be 3. Number of the plurality of buffer tubes 202 in the first layer of buffer tubes may vary. Number of the plurality of buffer tubes 202 in the second layer of buffer tubes may be 9. Number of the plurality of buffer tubes 202 in the second layer of buffer tubes may vary.

The fire resistant optical fibre cable 200 includes the thermal resistant water blocking tape 100. The thermal resistant water blocking tape 100 shows resistance against fire and possesses water blocking capabilities. The thermal resistant water blocking tape 100 includes the water blocking tape 102. In addition, the thermal resistant water blocking tape 100 includes the intumescent material 110 on the water blocking tape 102. The water blocking tape 102 is resistant to water penetration. The water blocking tape 102 is defined by the top surface and the bottom surface. The top surface may be towards a sheath of a cable and the bottom surface is towards a core of the cable. The water blocking tape 102 may include the top layer 104, the bottom layer 106 and the super absorbent powder 108. The super absorbent powder 108 may be sandwiched between the top layer 104 and the bottom layer 106. The top layer 104 and the bottom layer 106 correspond to the two layers of tapes of the water blocking tape 102. The structure of the water blocking tape 102 may include any currently available water blocking tape over which the intumescent material 110 can be applied. The intumescent material 110 may be coated on at least one of the top surface and the bottom surface of the water blocking tape 102. The top layer 104 and the bottom layer 106 may enclose the super absorbent powder 108.

Each of the top layer 104 and the bottom layer 106 may have the first side and the second side. The top layer 104 has the first side and the second side. In addition, the bottom layer 106 has the first side and the second side. Further, the first side of the top layer 104 is the outer side of the top layer 104. Furthermore, the second side of the top layer 104 is the inner side of the top layer 104. Moreover, the first side of the bottom layer 106 is the outer side of the bottom layer 106. Also, the second side of the bottom layer 106 is inner side of the bottom layer 106 (as explained above in the detailed description of FIG. 1).

The thermal resistant water blocking tape 100 facilitates low fire propagation through the fire resistant optical fibre cable 200. In addition, the thermal resistant water blocking tape 100 may facilitate low release of smoke and increases performance of the fire resistant optical fibre cables 200 in event of fire. Further, the thermal resistant water blocking tape 100 may not allow fire to penetrate into internal components (such as the plurality of buffer tubes 202) of the fire resistant optical fibre cable 200 in event of fire. The thermal resistant water blocking tape 100 creates a layer when any surface of any element is affected by fire which does not let the fire to penetrate to other layers. Furthermore, the thermal resistant water blocking tape 100 is designed to prevent water ingression inside the fire resistant optical fibre cable 200. Moreover, the thermal resistant water blocking tape 100 is used to prevent ingression of water in the plurality of buffer tubes 202. The intumescent material 110 applied on the water blocking tape 102 may be in an outward direction towards the sheath 210 of the optical fibre cable 200 and a layer of the water blocking tape 102 without the intumescent material 110 is in an inward direction towards core of the optical fibre cable 200.

The fire resistant optical fibre cable 200 includes the one or more water swellable yarns 206. The one or more water swellable yarns 206 is positioned inside the core of the fire resistant optical fibre cable 200. In addition, the one or more water swellable yarns 206 are positioned around the plurality of buffer tubes 202 of the first layer of buffer tubes and the second layer of buffer tubes. Number of the one or more water swellable yarns 206 is 12. Number of the one or more water swellable yarns 206 in the first layer of buffer tubes 204 is 6. Number of the one or more water swellable yarns 206 in the first layer of buffer tubes may vary.

Number of the one or more water swellable yarns 206 in the second layer of buffer tubes is 18. Number of the one or more water swellable yarns 206 in the second layer of buffer tubes 206 may vary. The fire resistant optical fibre cable 200 may include the mica tape 208. The mica tape 208 may surround the one or more layer of buffer tubes. The mica tape 208 acts as fire barrier.

The fire resistant optical fibre cable 200 includes the sheath 210. In addition, the sheath 210 may be used to provide inherent ability to the fire resistant optical fibre cable 200 to resist crushes, kinks and tensile stress. The sheath 210 is fire retardant. The sheath 210 may be made up of fire retardant material. The sheath 210 may be made up of LSZH (low smoke zero halogen) material. The sheath 210 may be made up of any suitable material of the like. The first side of the top layer 104 or the bottom layer 106 with the intumescent material 110 may face the sheath 210 of the fire resistant optical fibre cable 200. The second side of the top layer 104 or the bottom layer 106 of the thermal resistant water blocking tape 100 without the intumescent material 110 may face the core of the fire resistant optical fibre cable 200.

The fire resistant optical fibre cable 200 includes the one or more ripcords 212. A ripcord is a parallel cord that is positioned under a jacket of optical fibre cable for the purpose of facilitating jacket removal. Number of the one or more ripcords 212 in the fire resistant optical fibre cable 200 is two. Number of the one or more ripcords 212 in the optical fibre cable 200 may vary.

The thermal resistant water blocking tape 100 may be positioned inside the plurality of buffer tubes 202. The thermal resistant water blocking tape 100 may surround the optical fibre ribbon stack 204 or the plurality of optical fibres. The intumescent material 110 may be applied on the inner side of the sheath 210 of the fire resistant optical fibre cable 200. The intumescent material 110 is applied on the plurality of buffer tubes 202 of the fire resistant optical fibre cable 200. The intumescent material 110 may be applied on the inner side of the plurality of buffer tubes 202 of the fire resistant optical fibre cable 200. The intumescent material 110 may be filled in available space between the plurality of buffer tubes 202 and the sheath 210 of the fire resistant optical fibre cable 200.

The intumescent material 110 may be made up of water based non-toxic material. The intumescent material 110 may be made up of low volatile intumescent coating. The intumescent material 110 may be made up of fire retardant coating. The intumescent material 110 may be made up of any other suitable material of the like.

The intumescent material 110 may be applied on internal components of the fire resistant optical fibre cable 200. The intumescent material 110 may be sprayed on internal components of the fire resistant optical fibre cable 200. The intumescent material 110 may be coated on internal components of the fire resistant optical fibre cable 200.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Although the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

## Claims

1. A thermal resistant water blocking tape (100) for use in an optical fibre cable, the thermal resistant water blocking tape (100) comprising:
a water blocking tape (102) that is resistant to water penetration, wherein the water blocking tape (102) is defined by a top surface and a bottom surface, wherein the water blocking tape (102) has an intumescent material (110) that reduces transmission of thermal radiations across the thermal resistant water blocking tape (100) at elevated temperature.

2. The thermal resistant water blocking tape (100) as claimed in claim 1, the intumescent material (110) is coated on the water blocking tape (102).

3. The thermal resistant water blocking tape (100) as claimed in claim 1 or claim 2, wherein the intumescent material (110) produces insulating carbonaceous foam at elevated temperature, wherein the insulating carbonaceous foam reduces transmission of thermal radiations across the thermal resistant water blocking tape (100) at elevated temperature.

4. The thermal resistant water blocking tape (100) as claimed in any preceding claim, wherein the elevated temperature is in the range of 80° C to 600° C.

5. The thermal resistant water blocking tape (100) as claimed in any preceding claim, wherein the intumescent material (110), when exposed to the elevated temperature, swells from a first thickness to a second thickness producing the insulating carbonaceous foam, wherein the first thickness is greater than equal to the second thickness.

6. The thermal resistant water blocking tape (100) as claimed in any preceding claim, wherein the intumescent material (110) is coated on the water blocking tape (102) such that the coating has a thickness of 100 microns to 300 microns, wherein the intumescent material (110) is coated on a non-woven cloth has a thickness in a range of 300 microns to 500 microns.

7. The thermal resistant water blocking tape (100) as claimed in any preceding claim, wherein the water blocking tape (102) is made of one or more of a non-woven fabric and a glass based fabric.

8. The thermal resistant water blocking tape (100) as claimed in any preceding claim, wherein the intumescent material (110) is a water based intumescent paint, wherein the water based intumescent paint has water content between 50-60% and remaining solid content.

9. The thermal resistant water blocking tape (100) as claimed in any preceding claim, wherein the intumescent material (110) is made of one or more of a compound selected from a group consisting of pentaerythritol (PER) or dipentaerythritol, (DIPER), Ammonium polyphosphate, Aluminium tri hydroxide (ATH), Magnesium hydroxide, Nano materials (clay nanoparticles), Tio2, and one or more Coupling agents, Binders, Dispersing agent and Melamine.

10. The thermal resistant water blocking tape (100) as claimed in any preceding claim, wherein the water blocking tape (102) comprising:
a top layer (104);
a bottom layer (106); and
super absorbent powder (108) sandwiched between the top layer (104) and the bottom layer (106).

11. A thermal resistant water blocking tape (100) for use in an optical fibre cable, the thermal resistant water blocking tape (100) comprising:
a water blocking tape (102) comprising super absorbent powder (108) sandwiched between a top layer (104) and a bottom layer (106), wherein the water blocking tape (102) reduces transmission of thermal radiations across the thermal resistant water blocking tape (100) more than 80° C.

12. The thermal resistant water blocking tape (100) as claimed in claim 11, wherein the water blocking tape (102) is resistant to water penetration, wherein the water blocking tape (102) is defined by a top surface and a bottom surface, wherein the water blocking tape (102) has an intumescent material (110).

13. The thermal resistant water blocking tape (100) as claimed in claim 11 or claim 12 further comprising a intumescent material (110), wherein the intumescent material (110), when exposed to the elevated temperature, swells from a first thickness to a second thickness.

14. The thermal resistant water blocking tape (100) as claimed in claim 11 further comprising a intumescent material (110), wherein the intumescent material (110) is a water based intumescent paint, wherein the water based intumescent paint has water content between 50-60% and remaining solid content.

15. The thermal resistant water blocking tape (100) as claimed in claim 11 further comprising a intumescent material (110), wherein the intumescent material (110) is made of one or more of a compound selected from a group consisting of pentaerythritol (PER) or dipentaerythritol, (DIPER), Ammonium polyphosphate, Aluminium tri hydroxide (ATH), Magnesium hydroxide, Nano materials (clay nanoparticles), Tio2, and one or more Coupling agents, Binders, Dispersing agent and Melamine.
